# EUROPEAN PATENT APPLICATION

(11) **EP 0 742 376 A1**
(43) Date of publication of application: **13.11.1996**
(21) Application number: 96850089.2
(22) Date of filing: 07.05.1996
(51) Int. Cl.: F16C 25/06

(54) **A method for mounting preloaded bearings**

(30) Priority: 10.05.1995 SE 9501722
(71) Applicant: Aktiebolaget SKF, S-415 50 Göteborg (SE)
(72) Inventor: Manne, Nils, 418 72 Göteborg (SE); Johansson, Per-Olof, 444 65 Jörlanda (SE)
(74) Representative: Westman, P. Börje I.

(57) **Abstract**

A method for mounting on a shaft (2) extending through a housing (1), a preloaded rolling bearing assembly incorporating first and second rolling bearings (6, 7) capable of supporting axial load, comprising the following features; mounting the outer race rings of both bearings (6, 7) in axially fixed positions in the housing (1),
mounting inner race rings (6a, 7a) with shrink fit on the shaft (2), and with the rolling bodies disposed between said inner and outer race rings,
introducing in the interface between the inner envelope surface of the inner race ring (7a) of the second bearing (7) and the shaft (2) a pressure medium, creating a thin medium film in said interface for allowing said inner race ring (7a) to be axially displaced,
applying an axial force on said inner race ring (7a), measuring the axial force thus applied,
draining the pressure medium from the interface between inner race ring (7a) and shaft (2), when a predetermined axial force is reached, and
relieving said axial force.

## Description

The present invention refers to a method for mounting preloaded bearings, particularly bearings carrying axial load on a cylindrical bearing seat.

Many bearing assemblies, e.g. wheel bearings for industrial trucks, often consist of two taper roller bearings mounted in back-to-back arrangement. The wheel bearing assembly of an industrial truck shall be adjusted to a predetermined preload. For making it possible to give the bearings a correct bearing clearance, the inner bearing race ring is usually mounted with a loose fit on the shaft. A loose fit however is always a compromise, as there is a big risk for wear between inner race ring and shaft. The problem faced with the hard fit required for eliminating this wear problem, is that it is difficult to adjust the position of the bearing race ring for accomplishing a correct clearance or preload.

FR-A-1 066 989 refers to a bearing assembly comprising two taper roller bearings mounted in back-to-back arrangement, whereby the shaft is provided with a channel system for supply of pressure oil to the area between the shaft and the inner race ring of one of the bearings. By this provision it is possible to inject pressure medium in the channel system, thereby separating the shaft surface and the corresponding surface of the inner race ring. Hereby the inner race ring can be readily displaced along its bearing seat, and by aid of a mounting sleeve pressing against the side face of the bearing ring this can be moved to a position giving the desired preload. This publication however does not propose a method for applying the required force for reaching a predetermined preload in a simple and reliable manner.

SE-A-7210816-0 refers to a very exclusive supporting of a precision spindle for machine tools, incorporating a conventional taper roller bearing and an especially designed taper roller bearing, which both have their outer and inner race rings axially arrested. A hydraulic piston-cylinder is provided actively to move the rollers of the especially designed taper roller bearing in axial direction continuously during operation of the bearing assembly to compensate for speed differences. This is a very expensive bearing assembly, which furthermore has a drawback in that the preload of the bearing assembly would disappear instantly if the hydraulic pressure for any reason should be interrupted.

The purpose of the present invention is to provide a method for mounting preloaded bearings, particularly taper bearings or angular contact bearings on a cylindrical bearing seat, by which method it is suggested how the adjustment force shall be applied and primarily how a proper (correct) adjustment force shall be established, and this has been obtained by the features defined in the characterizing part of the accompanying claim 1.

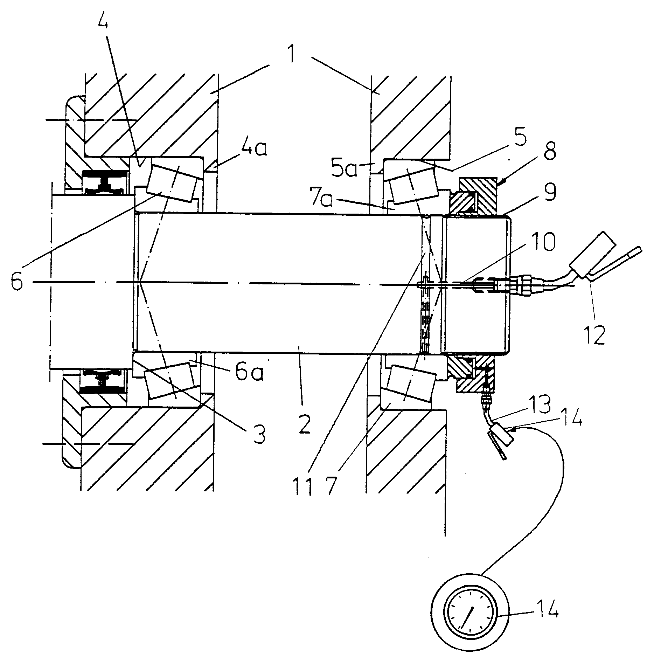

Hereinafter the invention will be further described with reference to the accompanying drawing show one non-limiting embodiment of a bearing assembly at which the method according to the invention can be carried out.

The drawing shows a bearing assembly incorporating a bearing housing 1 in which is received a cylindrical shaft 2 having a shoulder 3. The bearing housing has two axially spaced apart seats 4, 5, each being provided with a radial, annular shoulder 4a, 5a. The shaft 2 is supported in two taper roller bearings 6, 7, mounted in back-to-back arrangement, and each having an outer race ring, mounted in its bearing seat 4 and 5 resp. in the bearing housing with hard fit and each one bearing against the bearing housing shoulders 4a and 5a, resp., whereby the outer race rings are positioned axially.

At mounting the inner race ring 6a of the innermost bearing 6 is heated and is mounted on its bearing seat on the shaft 2 bearing against the shoulder 3, whereupon the shaft 2, with said inner race ring 6a thus mounted is inserted in the housing 1 and located in its proper position.

Thereupon the inner race ring 7a of the outermost bearing 7 is heated and positioned in its position on the shaft 2, whereupon the assembly is allowed to cool down.

Then a hydraulic nut 8 is mounted on a threaded portion 9 of the shaft 2 outside the inner race ring 7a of the outermost bearing 7.

The shaft 2 has a duct 10, communicating with a circumferential groove 11 in the shaft 2, at the position of the location for the outermost bearing 7. An oil pump 12 is connected to the duct and pressure oil is injected in the circumferential groove 11 in accordance with the well-known SKF Oil Injection Method, whereby the area between the contacting envelope surfaces of shaft 2 and inner race ring 7a is put under pressure, thus that said surfaces are separated by an oil film making it possible readily to displace the inner race ring 7a in its bearing seat on the shaft 2.

At this moment the hydraulic nut 8 is pressurized via an oil pump 13 with pressure gauge 14, while at the same time the bearing is rotated, for ascertaining that all rollers are correctly positioned in the bearing. The pressure of the oil delivered to the hydraulic nut by the oil pump 13 is red on the pressure gauge 14, and as the piston area of the hydraulic nut is known, it is very easy to establish the preload force applied to the outer bearing 7 as this is the product of the hydraulic pressure p and the area A of the piston, $\text{Fa = p x A}$.

When the pressure red on the pressure gauge 14 has reached the correct value for causing the predetermined preload in the bearing assembly, the pressure oil contained in the duct 10 and the groove 11 is drained via the oil pump 12, whereby the pressure separating the shaft envelope surface and the inner envelope surface of the inner race ring 7a is relieved and the grip of the said race ring around the shaft is reestablished.

Thereupon the pressure acting upon the hydraulic nut 8 is relieved. Now the hydraulic nut is dismounted and removed and a lock nut is mounted for securing the preloaded bearing assembly.

In order to facilitate the method even further it is also suggested that the gauge of the hydraulic nut is designed or equipped with means for directly showing the momentary preload in the bearing assembly. This can be achieved by means of a digital gauge, which e.g. can show the actual pressure and also the actual preload by multiplying in a calculating unit the actual pressure with the piston area for the hydraulic nut used. Such display means are readily available, and can be used for different hydraulic nuts, whereby data about the piston area of the nut is stored manually in the calculating unit.

Such display means also can take the form of loose gauge face plates, e.g. delivered together with the hydraulic nut and having a series of indices representing preload, i.e. pressure values multiplied with the known piston area of the hydraulic nut to which the gauge face plate belongs, such gauge face plates being attachable to and readily exchangeable from the pressure gauge 14.

This method gives a simple and repetetive preload. The method is inexpensive and reliable and gives a shortened time of mounting with an increased accuracy and quality of the finished bearing assembly.

The preloaded bearing assembly will maintain its preload, as the inner race ring 7a of the outermost bearing 7 will resume its shrink fit to the shaft as soon as the pressure oil acting in the circumferential groove 11 in the shaft 2 is relieved, and therefor the future preload is not dependent of a maintained hydraulic pressure, neither in duct 10, nor in the hydraulic nut.

Although the bearing assembly as shown and described incorporates two taper roller bearings, it is evident that the method according to the invention can be used for axial preloading of any bearing assembly carrying axial load, e.g. angular contact bearings, bearings having an axial contact flange and even deep groove ball bearings.

The invention is not limited to the embodiment shown in the accompanying drawings and described with reference thereto but modifications and variantions are possible within the scope of the appended claims.

## Claims

1. A method for mounting on a shaft (2) extending at least partly through a housing (1), a preloaded rolling bearing assembly incorporating a first and a second rolling bearing (6, 7) capable of supporting axial load, comprising the following features, partly known per se:
mounting the outer race rings of both bearings (6, 7) in axially fixed positions in the housing (1),
mounting the inner race rings (6a, 7a) with shrink fit on the shaft (2), and with the rolling bodies disposed between said inner and outer race rings of said first and second bearing (6, 7),
introducing in the interface between the inner envelope surface of the inner race ring (7a) of the second bearing (7) and the shaft (2) a pressure medium, creating a thin medium film in said interface for allowing said inner race ring (7a) to be axially displaced,
applying an axial force on said inner race ring (7a) of the second bearing (7),
measuring the axial force thus applied,
draining the pressure medium from the interface between said inner race ring (7a) and the shaft (2), when a predetermined axial force is reached, and relieving said axial force.

2. A method as claimed in claim 1,
**characterized therein**,
that the axial force is applied by means of a hydraulic nut (8), and that the axial force applied is established as a product of the pressure in the hydraulic nut and the area of the piston of said hydraulic nut.

3. A method for mounting a preloaded rolling bearing assembly, particularly a first and a second rolling bearing carrying axial load, on a cylindrical bearing seat, incorporating the following features, partly known per se: mounting the outer race rings of said first and second bearings (6, 7) in a seat (4, 5) of a housing (1) in axially fixed positions;
mounting the inner race ring (6a) of the first one (6) of said bearings with its set of rolling bodies in an axially fixed position on a cylindrical seat on a shaft (2); inserting the shaft (2) with the said inner race ring (6a) thus mounted in the housing (1) and locating it in proper position;
mounting the inner race ring (7a) of the second bearing (7) with its set of rolling bodies fixedly on the shaft (2) in proper position;
mounting a hydraulic nut (8) on the shaft (2) bearing against the side of the inner race ring (7a) of the second bearing (7) facing away from the first bearing (6);
introducing via a channel (10) in the shaft (2), a pressure medium between the inner envelope surface of the inner race ring (7a) of the second bearing (7) and the envelope surface of the shaft (2), thus separating the said envelope surfaces by a thin oil film;
pressurizing the hydraulic nut to apply an axial pressure on the inner race ring (7a) of the second race ring (7);
reading the actual hydraulic pressure value on a gauge (§4) associated with the hydraulic nut (8);
calculating the actual axial force applied to the bearing assembly as a product of said red pressure value and the known area of the hydraulic nut;
draining the pressure medium from the interface between the envelope surfaces of shaft (2) and inner race ring (7a) of the second bearing (7), when a predetermined axial force has been reached, thus allowing said inner race ring (7a) to be held with a fit in axial position on the shaft (2);
relieving the pressure from the hydraulic nut (8);
removing the hydraulic nut (8) from the shaft (2); and securing the inner race ring (7a) of the second bearing (7) in its position.

4. A method as claimed in anyone of claims 2 and 3,
**characterized in**,
using a pressure gauge (14) connected to the hydraulic nut (8) and having a scale face plate directly showing the actual axial force applied to the inner race ring (7a) of said second bearing (7).

5. A method as claimed in claim 4,
**characterized in**
using a pressure gauge associated with a calculating unit arranged to calculate and display the actual axial force after multiplication of hydraulic pressure and piston area of the hydraulic nut.

6. A method as claimed in claim 4,
**characterized in**
using a loose gauge face plate, associated with a specific hydraulic nut and having a graduation showing axial force as a product of temporary pressure value and known area of said hydraulic nut, applying said gauge face plate over the face plate of the gauge, and using the red off values as true axial force values.
